# EUROPEAN PATENT APPLICATION

(11) **EP 2 056 572 A1**
(43) Date of publication of application: **06.05.2009**
(21) Application number: 07301517.4
(22) Date of filing: 31.10.2007
(51) Int. Cl.: H04L 29/08

(54) **Pull from peer method to acquire missing parts of a content file from a group**

(71) Applicant: Thomson Licensing, 92100 Boulogne-Billancourt (FR)
(72) Inventor: Boudani, Ali, 35000, RENNES (FR); Champel, Mary-Luc, 35220, Marpiré (FR); Diot, Christophe, 06230, VILLEFRANCHE SUR MER (FR)
(74) Representative: Ruellan-Lemonnier, Brigitte

(57) **Abstract**

The invention concerns a method of distributing content in a communication network comprising a plurality of interconnected communication devices, said content being divided in a plurality of symbols, comprising a step in which the different symbols of content are distributed over the communication devices, said method being characterized in that it comprises the following steps:
• requesting, by a communication device D1, a list L1 of communication devices that contain symbols of content that said communication device D1 has not received yet;
• receiving, at said communication device D1, the list L1 of communication devices that contain symbols of content that said communication device D1 has not received yet;
• requesting, by said communication device D1, to communication devices of said list L1 of communication devices, missing symbols of content (S1, S2, ..., SN) ; and
• receiving, at said communication device D1, said missing symbols of content (S1, S2, ..., SN).

The invention also concerns a communication device.

## Description

### FIELD OF THE INVENTION

The present invention pertains to the field of content distribution in communication networks.

### BACKGROUND OF THE INVENTION

The concept of peer-to-peer is increasingly evolving in today's networks. Peer nodes in a peer-to-peer network are equal and can simultaneously be clients and servers to the other nodes on the network. Peer nodes share and exchange content files (audio, video, data or anything in digital format) and each node has the same capabilities and either node can initiate a communication session. This model of network is very different from the client server model.

Some peer networks and channels use a client-server structure for some tasks (e.g. searching) and a peer-to-peer structure for others. Other networks use a peer-to-peer structure for all purposes although it is sometimes greatly facilitated by directory servers that inform peers of the network addresses of other peers. Based on how peer nodes in a network are linked to each other, P2P networks can be classified as unstructured or structured networks.

An unstructured P2P network is a network where overlay links are established arbitrarily. Such networks can be easily constructed as a new peer that wishes to join the network can copy existing links of another node and then form its own links over time. In an unstructured P2P network, if a peer wants to find a desired piece of data in the network, the query has to be flooded through the network in order to find as many peers as possible that share the data. The main disadvantage with such networks is that the queries may not always be resolved. This will result in a high amount of signaling traffic in the network. Such networks typically have very poor search efficiency. It should be noted that most of the popular P2P networks are unstructured.

Structured P2P networks overcome the limitations of unstructured networks by maintaining a distributed hash table and by allowing each peer to be responsible for a specific part of contents in the network. These networks use hash functions and assign values to every content and every peer in the network and then follow a global protocol in determining which peer is responsible for which content. This way, whenever a peer wants to search for some data, it uses the global protocol to determine the peer(s) responsible for the data and then directs the search towards the responsible peer(s).

In the aim to design a content delivery system to be implemented on Customer Premise Terminal Equipment (i.e., CPTE - including gateway, DSL modem, set-top-boxes, etc.), that relies on P2P and push technologies to deliver secure content in pseudo streaming, a push to peer model has been proposed in the PCT patent application WO 2007/080345 "*Multimedia content delivery method and system*" (Thomson Licensing). The invention of this PCT patent application relates to a multimedia content delivery method which is characterised in that it comprises the following steps, namely: a first step consisting in partially downloading a multimedia content in push mode from a content server to a client device (EC1), and a second step consisting in downloading the missing elements from the multimedia content in pull mode using a peer-to-peer mechanism from another client device (EC2). The invention is also characterised in that the multimedia content can be recreated with n + p blocks, whereby n and p are non-zero natural numbers, n blocks being downloaded during the first step and p blocks being downloaded during the second step. The multimedia content can only be used after n + p blocks have been received. It is based on the idea that backbones are over-provisioned and bandwidth does not really matter in the core. Traffic should be optimized between the DSLAM (Digital Subscriber Line Access Multiplexer) and the clients though.

The invention of this prior PCT patent application is based on the idea that VOD (Video On Demand) is a service that should be delivered using the CPTE (Customer Premise Terminal Equipment) instead of specially deployed servers as in CDNs (Content Delivery Networks). Several peers behind one DSLAM for example should replace a CDN. That means that contents that are normally stored in a CDN point should be distributed to peers belonging to the same network behind a DSLAM. The "media" content is divided into several parts called blocks (list of symbols). Several amount of these symbols are distributed (using the distribution algorithm) to the different peers. A certain percentage of data exists in one peer while a copy of the rest is stored in several different peers.

### SUMMARY OF THE INVENTION

The prior PCT patent application WO 2007/080345 "*Multimedia content delivery method and system*" from Thomson Licensing mentions a pull mechanism but does not disclose a particular pull method.

The technical problem the present invention seeks to solve is the following: how to download missing symbols in a fast and efficient way for a given peer?

The present invention is defined, in its broader sense, in independent claims 1 and 7.

Advantageous embodiments are presented in the dependent claims.

### BRIEF DESCRIPTION OF THE DRAWINGS

The following detailed description will be better understood with the drawings, in which:
- Figure 1 shows an embodiment of the method according to the invention ;
- Figure 2 represents an embodiment of the method according to the invention with priority downloading ;
- Figure 3 illustrates another embodiment of the method according to the invention with priority downloading ; and
- Figure 4 shows an example of a peer.

### DETAILED DESCRIPTION

The invention proposes to use an efficient method in order to design a scalable system that minimizes the time it takes for a customer peer to start playing a given content. It also partially solves the problem of limited upload bandwidth that exists in ADSL (Asymmetric Digital Subscriber Line) connections. We suppose that a peer node has enough buffers to store the data.

It is supposed that an efficient distribution algorithm is used to distribute the different symbols of content over the peers belonging to the same DSLAM (Digital Subscriber Line Access Multiplexer). In a particular peer node, the different symbols should be completed by other symbols that can be found in a different peer to reconstruct the initial content. A cost comparison function of symbols quantity to be stocked could also be introduced.

A content could for instance be a movie. This movie could be subdivided into chapters or into parts of equal size.

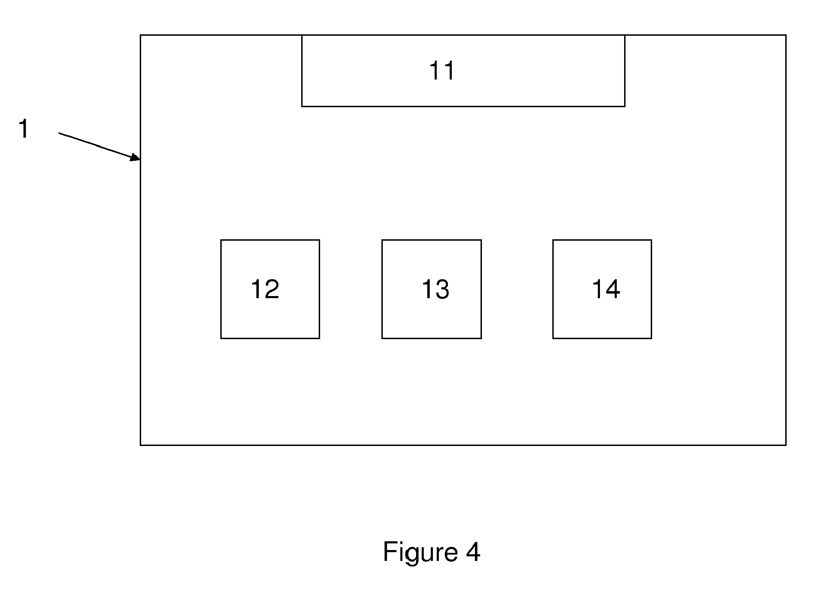

The peer 1 shown on Figure 4 comprises a communication interface 11, a processor 12, a volatile memory 13 and a non-volatile memory 14.

The communication interface 11 could for instance be a DSL interface, and more particularly an ADSL interface. The volatile memory 13 is used to store received symbols. The non-volatile memory 14 is used to store received symbols that correspond to some content, this storage possibly corresponding to a certain order.

The symbols are stored in the different memories 13 and 14 with references in order to allow the processor 12 to process these symbols.

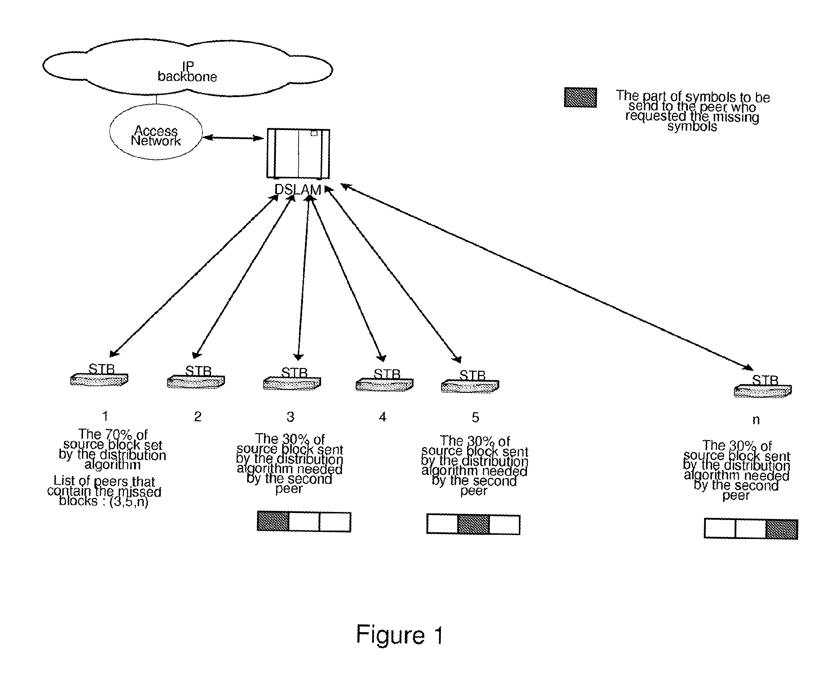

On Figures 1 to 3, the peers are set-top boxes. These peers could also be home gateways, personal computers, personal digital assistants, cell phones, residential phones or any communication device.

The method according to the present invention preferably comprises a preliminary step of downloading some symbols of content from a content server to a first customer peer.

On Figures 1 to 3, some percentages are indicated (30 % and 70 %). It is clear that these percentages are only examples. In the frame of the present invention, other percentages could be used.

In a peer to peer network as the one disclosed in Figure 1, a research request is sent from one customer peer (client_1 in the example) to the list of peers that contain the rest of the content. This list may be sent by a billing server after a fast request from the customer peer (client_1). So the list of server peers (client_3, client_5 and client_n) that contain the missing symbols is known by the customer peer (client_1).

Client_1 (called customer peer) will send a request to client_3, client_5 and client_n that contain the missing symbols (peers are called server peers). It also sends the list of these peers that contain the missing symbols (peer set) within the same request.

Another alternative is to send the list of all peers to the customer peer and the peer set (by using a centralized control server which may be the billing server). The customer peer will then contact directly the other server peers to download the missed symbols.

Client_3 will receive the request message and will discover that it is the first in the list. It will send the first 1/3 (since there are 3 peers in the list) of symbols to client_1. Client_5 will send the second 1/3 of symbols and client_n will send the rest 1/3 of symbols to client_1.

When receiving a certain amount of symbols and the content is judged valid by the customer peer (or STB (set-top box)), a message is sent to the billing server.

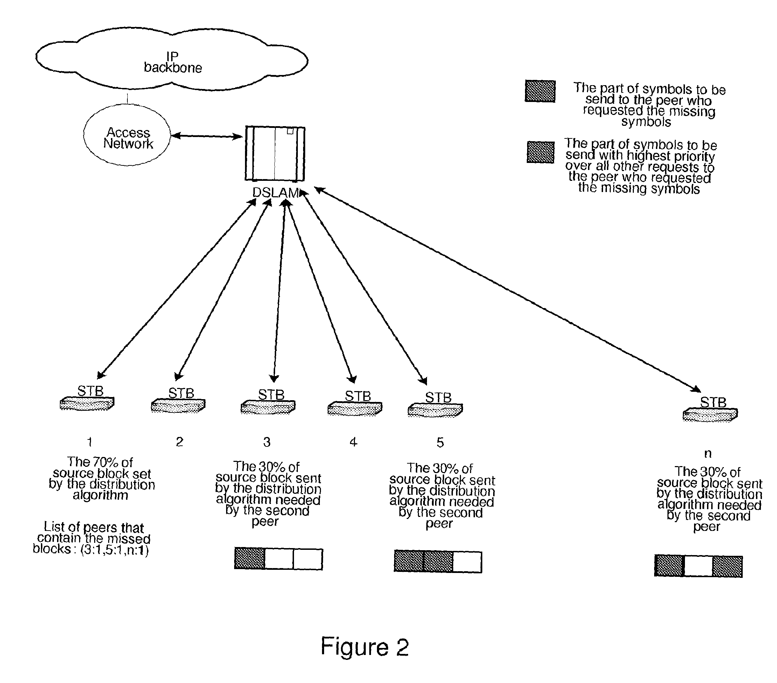

For time critical applications (see Figure 2), it is proposed to use a symbol priority downloading in a request. For example, let us suppose that client_1 can tolerate the absence of the first missing "1/3" and second missing "1/3" of blocks but it needs the last "1/3" of symbol blocks. It will send to the server peers the list with corresponding priority downloading for critical time. Typical applications are those where a player needs specific symbols for the decoder.

The list with the information related to priority contains, in an embodiment of the invention:
Customer_peer(Client_1)&missing_symbols(Block_n umber, symbol_number);(Block_number, symbol_number) & (Peer_1);(Peer_2);(peer_3)
   Or
Customer_peer(Client_1)&missing_symbols(Block_n umber, symbol_number);(Block_number, symbol_number) &method1&(Peer_1, Block_number priority);(Peer_2, Block_number priority);(peer_3, Block_number priority)
   Or
Customer_peer(Client_1)&missing_symbols(Block_n umber, symbol_number);(Block_number, symbol_number) &method2&(Peer_1, Block_number priority);(Peer_2, Block_number priority);(peer_3, Block_number priority)

The server peer will respond in one of the two methods:
Method1: each server peer sends the Block with the number Block_number to the customer peer.
Method2: each peer will choose a part of the Block_number to send it to the customer peer.

Other applications to this model can be the use of SVC (Scalable Video Coding) information. When downloading video content with SVC, the base layer will have the highest priority while the enhancement layer will have the lowest one. A player will be able to play correctly the part of the content with previously missing symbols but with lower quality level.

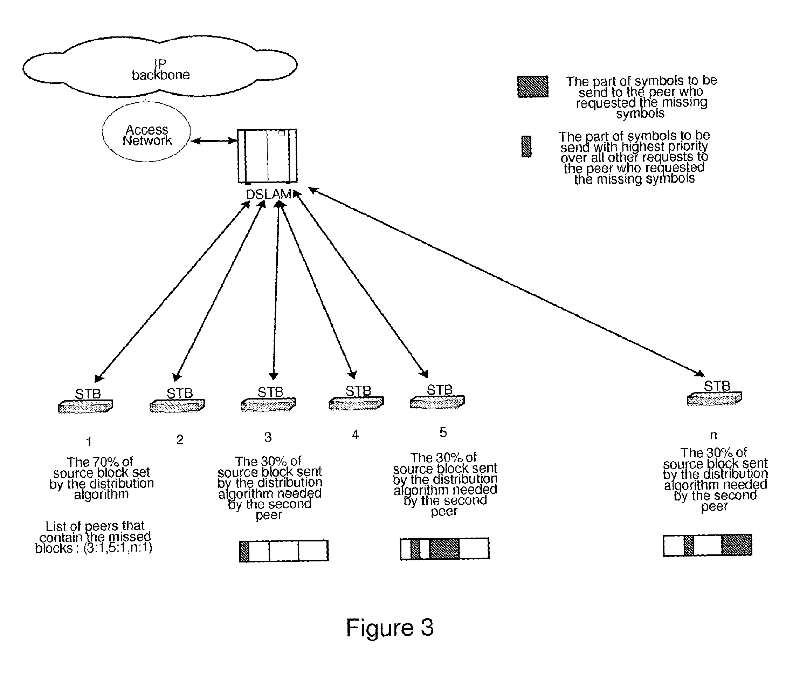

A variant of this method (as shown in Figure 3), is to divide the critical missing symbols block into equal parts and send each part to the customer peer (client_1). By using this method, the customer peer will acquire rapidly the critical missing symbols.

The above specification, examples and drawings provide a complete description of the method according to the present invention. Since many embodiments of the invention can be made without departing from the spirit and scope of the invention, the invention resides in the claims herein after appended.

## Claims

1. Method of distributing content in a communication network comprising a plurality of interconnected communication devices, said content being divided in a plurality of symbols, comprising a step in which the different symbols of content are distributed over the communication devices, said method being **characterized in that** it comprises the following steps:
• requesting, by a communication device D1, a list L1 of communication devices that contain symbols of content that said communication device D1 has not received yet;
• receiving, at said communication device D1, the list L1 of communication devices that contain symbols of content that said communication device D1 has not received yet;
• requesting, by said communication device D1, to communication devices of said list L1 of communication devices, missing symbols of content (Sl, S2, ..., SN) ; and
• receiving, at said communication device D1, said missing symbols of content (Sl, S2, ..., SN).

2. Method of distribution of content in a communication network according to claim 1 **characterized in that** a priority order is established for the downloading of missing symbols of content (Sl, S2, ..., SN) from said list L1 of communication devices to said communication device D1.

3. Method of distribution of content in a communication network according to claim 2 **characterized in that** said content is encoded using Scalable Video Coding (SVC) and **in that** the base layer, according to SVC coding, has a priority that is higher than the enhancement layer, according to SVC coding.

4. Method of distribution of content in a communication network according to one of the preceding claims **characterized in that** the list L1 is provided by a control server.

5. Method of distribution of content in a communication network according to one of the preceding claims **characterized in that** the different missing symbols of content (Sl, S2, ..., SN) are provided by different communication devices.

6. Method of distribution of content in a communication network according to one of the preceding claims **characterized in that** it comprises a preliminary step of downloading some symbols of content from a content server to said communication device D1.

7. Communication device D1 comprising means for receiving a part of content divided in symbols, **characterized in that** it further comprises:
• means for requesting, a list L1 of other communication devices that contain symbols of content that it has not received yet;
• means for receiving, the list L1 of communication devices that contain symbols of content that it has not received yet ;
• means for requesting, to communication devices of said list L1 of communication devices, missing symbols of content (Sl, S2, ..., SN) ; and
• means for receiving, said missing symbols of content (Sl, S2, ..., SN).
